# EUROPÄISCHE PATENTANMELDUNG

(11) **EP 1 304 088 A1**
(43) Veröffentlichungstag der Anmeldung: **23.04.2003**
(21) Anmeldenummer: 01123345.9
(22) Anmeldetag: 09.10.2001
(51) Int. Cl.: A61C 13/00

(54) **Verfahren und Vorrichtung zum Herstellen von Passkörpern zur Restauration von Zähnen**

(71) Anmelder: Mörmann, Werner, 8053 Zürich (CH)
(72) Erfinder: Mörmann-Buchmann, Jeanette., CH-08053 Zürich (CH)
(74) Vertreter: Blum, Rudolf Emil Ernst

(57) **Zusammenfassung**

Im hier gezeigten Verfahren zur Herstellung eines Passkörpers zur Restauration eines zu behandelnden Zahns wird eine Vielzahl von zu Zahnteilen vorgeformten Konfektionskörpern (1) bereitgestellt, deren Form und Grösse als Konfektionsparameter in einer Datenbank (3) abgelegt ist. Die Konfektionskörper haben z.B. die Form von Zahnkronen. Sodann werden an einem Patienten morphologische Parameter aufgenommen, die die Form und Grösse des gewünschten Passkörpers festlegen. Die morphologischen Parameter werden mit den Konfektionsparametern der Datenbank (3) verglichen und der zu verwendende Konfektionskörper wird ausgewählt. Es wird eine Formkorrektur aus den Unterschieden zwischen dem ausgewählten Konfektionskörper und den morphologischen Parametern berechnet und verwendet, um den ausgewählten Konfektionskörper in einer numerisch gesteuerten Nachbearbeitungsvorrichtung zu bearbeiten. Auf diese Weise kann mit kleinem Nachbearbeitungsaufwand ein geeigneter Passkörper hergestellt werden.

## Beschreibung

Die Erfindung betrifft ein Verfahren und eine Vorrichtung zum Herstellen von Passkörpern zur Restauration von Zähnen sowie Konfektionskörper gemäss Oberbegriff der unabhängigen Ansprüche.

Unter dem Begriff "Passkörper" soll hier ein in seiner Form angepasster Körper zum Ersatz eines Teils eines zu behandelnden Zahns verstanden werden, z.B. eine Vollkrone, eine Teilkrone (Onlay oder Overlay), eine Einlagefüllung (Inlay) oder, im Frontzahnbereich, Vollkronen und Schalenverblendungen (Veneers).

Zur Herstellung von totalen oder partiellen Zahnprothesen sind industriell gefertigte Sortimente von Konfektionszähnen aus Keramik (Porzellan) und Kunststoff bzw. Komposit bekannt. Moderne Prothesenzähne weisen anatomisch naturnahe Formen und eine anspruchsvolle ästhetische Gestaltung auf. Zahntechnische Labors führen im allgemeinen ein Zahnlager mit Sortimentszähnen der gängigsten Grössen, Formen und Farben. Ein Zahnlager kann beispielsweise zwischen 800 und 3000 Einzelzähne enthalten. Die Konfektionszähne werden vom Zahntechniker als Vorfabrikate bei der Herstellung der Teil- und Vollprothesen vor allem bezüglich der Form und Grösse manuell angepasst.

US 4 766 704 und EP 054 785 beschreiben Verfahren und Vorrichtungen zur Herstellung von Passkörpern, bei welchen aus im wesentlichen rechteckigen Materialblöcken Restaurationskörper hergestellt werden. Obwohl diese Verfahren ausgezeichnete Resultate liefern, verlangen sie vom ausführenden Zahnarzt oder Zahntechniker ein gewisses Mass an Routine zur CAD-Konstruktion der Restaurationskörpers. Ausserdem ist eine individualisierende Nachbearbeitung und Politur des geformten Restaurationskörpers nötig. Schliesslich werden zur Herstellung von Restaurationskörpern mit Farbschichtung und für Kappenkronen spezielle Rohlinge und zusätzliche labortechnische Arbeitsschritte benötigt.

Es stellt sich deshalb die Aufgabe, ein Verfahren und eine Vorrichtung der eingangs genannten Art bereitzustellen, die in einfacher und schneller Weise die Herstellung eines Passkörpers erlauben.

Diese Aufgabe wird durch die unabhängigen Ansprüche gelöst.

Erfindungsgemäss werden also eine Vielzahl von Konfektionskörpern bereitgestellt, die zu Zahnteilen, insbesondere Kronen, vorgeformt sind. Die Konfektionskörper weisen also bereits im wesentlichen die Formen typischer Zahnteile auf. Form und Grösse der Konfektionskörper werden als Konfektionsparameter in einer Datenbank abgelegt.

Zum Erstellen des Passkörpers werden am Patienten morphologische Parameter aufgenommen, welche die Form und Grösse des gewünschten Passkörpers mindestens teilweise festlegen. Die morphologischen Parameter werden mit den Konfektionsparametern in der Datenbank verglichen um einen zu verwendenden Konfektionskörper auszuwählen. Hierzu wird eine geeignete Auswahlregel verwendet, welche z.B. denjenigen Konfektionskörper ortet, welcher das geringste Mass an Nachbearbeitung benötigt.

Aus den Unterschieden zwischen dem zu verwendenden Konfektionskörper und den morphologischen Parametern wird eine Formkorrektur berechnet, die beschreibt, wo und wie stark der zu verwendende Konfektionskörper vom herzustellenden Passkörper abweicht. Diese Formkorrektur wird zur numerischen Steuerung einer abrasiven Nachbearbeitung des zu verwendenden Konfektionskörpers verwendet.

Dank diesem Verfahren kann aus einer Vielzahl von Konfektionskörpern einer ausgewählt werden, der ein lediglich geringes Mass an Nachbearbeitung erfordert. Dadurch wird der Bearbeitungsaufwand reduziert. Individualisierende manuelle Nachbehandlungen und Nachpolituren sind allenfalls nur noch stellenweise erfoderlich. Ferner reduzieren sich die Anforderungen an das gestalterische Geschick des Zahnarztes bzw. Zahntechnikers, da der Konfektionskörper bereits ungefähr die Form des zu erstellenden Passkörpers besitzt.

Um die relative Lage des zu verwendenden Konfektionskörpers in der Nachbearbeitungsvorrichtung festzulegen, wird vorzugsweise eine Messung durchgeführt, am besten indem ein numerisch gesteuertes Werkzeug der Nachbearbeitungsvorrichtung an mehreren Punkten an den Konfektionskörper bzw. seine Haltevorrichtung herangeführt wird. Ist der Konfektionskörper eine Zahnkrone, so wird vorzugsweise die mesiale und die distale Wand, die Kaufläche (insbesondere deren zentrale Fossa und deren Höcker) sowie die zervikale Präparationsfläche kontaktiert, da diese Teile die wichtigsten Referenzflächen bzw. die hauptsächlichen Bearbeitungsbereiche des Passkörpers bilden.

Zum Aufnehmen der morphologischen Parameter werden vorzugsweise die Positionen bzw. angrenzenden Flächen der Nachbarzähne des zu behandelnden Zahns ausgemessen, da diese wichtige Angaben über die mesio-distale Länge des Passkörpers und seine Nachbarbeziehung liefern. Auch können Aufnahmen an antagonistischen Zähnen zur Bestimmung der morphologischen Parameter der Kaufläche durchgeführt werden.

Zum Befestigen des zu verwendenden Konfektionskörpers in der Nachbearbeitungsvorrichtung während der Nachbearbeitung kann eine Haltevorrichtung vorgesehen sein. Vorzugsweise lässt die Haltevorrichtung die okklusale Fläche und den Fügebereich zur Präparationsfläche (d.h. die dem zu behandelnden Zahn zugewandte Fläche) frei, da erstere für die Lageanpassung in der Nachbearbeitungsvorrichtung wichtig ist und letztere in erster Linie nachbearbeitet werden muss. Vorzugsweise lässt die Haltevorrichtung auch zentrale Bereiche der mesialen und distalen Wände frei, so dass diese mit dem Werkzeug zur Positionsbestimmung kontaktiert werden können. Eine besonders gute Halterung ergibt sich, wenn die Haltevorrichtung den Konfektionskörper formschlüssig umgreift. Vorzugsweise ist die Haltevorrichtung elastisch, so dass sie durch elastische Deformation vom Konfektionskörper entfernt werden kann.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine Übersicht über das erfindungsgemässe Verfahren,
Fig. 2 eine Seitenansicht einer Konfektionskrone mit gestrichelt dargestellter Haltevorrichtung,
Fig. 3 eine Draufsicht auf die Konfektionskrone nach Fig. 1.

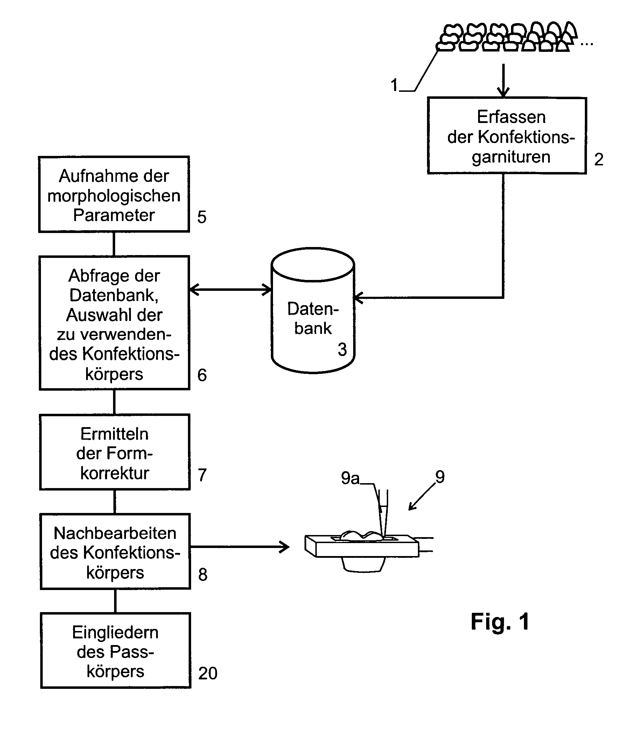

Zunächst soll anhand von Fig. 1 eine Übersicht über das erfindungsgemässe Verfahren gegeben werden.

Das Verfahren geht davon aus, dass ein Konfektionssatz aus einer Vielzahl von unterschiedlichen Konfektionskörpern 1 (Konfektionsgarnituren) als Vorfabrikate bereitgestellt wird. Jeder Konfektionskörper besitzt eine Form und Grösse, die mindestens einem Teil eines möglichen Zahns entspricht. Der Konfektionssatz umfasst Konfektionskörper unterschiedlichster Form und Grösse und mit unterschiedlicher Farbe, gegebenenfalls auch aus unterschiedlichen Materialien. Vorzugsweise umfasst der Konfektionssatz Zahnkronen für eine Vielzahl typischer Zahnformen. Zusätzlich können auch andere Zahnteile, wie z.B. Veneers oder typische Inlays vorhanden sein.

Die individuellen Merkmale jedes Konfektionskörpers 1 werden mechanisch, optisch, elektronisch oder in anderer Weise erfasst (Schritt 2) und in Form von Konfektionsparametern in einer Datenbank 3 abgelegt. Beispielsweise kann hierzu die Oberfläche jedes Konfektionskörpers in Form eines Oberflächereliefs erfasst werden. Die Erfassung der Konfektionsparameter kann z.B. vom Hersteller der Konfektionskörper durchgeführt werden. Mögliche Grössen, die als Konfektionsparameter in Frage kommen, werden weiter unten genannt.

Im Folgenden werden die Schritte zur Herstellung eines Passkörpers beschrieben, der z.B. als Vollkrone, Teilkrone, Einlagefüllung (Inlay) oder Schalenverblendung (Veneer) einen zu behandelnden Zahn restaurieren soll.

In Schritt 5 werden hierzu die morphologischen Parameter des zu erstellenden Passkörpers ermittelt. Die morphologischen Parameter beschreiben die Form und gegebenenfalls weitere Aspekte (wie z.B. gewünschte Farbe oder gewünschtes Material) des zu erstellenden Passkörpers. Als morphologische Parameter kommt z.B. jede beliebige Kombination einer oder mehrerer der Werte gemäss folgender Tabelle in Frage.

### Tabelle 1 - einige mögliche morphologische Parameter

- Der Zahntyp des zu behandelnden Zahns (z.B. zweiter Molar oben links).
- Die mesio-distale Ausdehnung.
- Die oro-bukkale Ausdehnung.
- Die Position der Schmelz-Zementgrenze, z.B. als Verlauf ihres Abstands vom höchsten Zahnhöcker.
- Für Seitenzähne die Position der Höckerspitzen und/oder der Längsfissuren und/oder der Querfissuren und/oder der Randleisten.
- Für Veneers eine von fazial gesehene Umfangslinie und/oder ein Höhenprofil entlang mindestens einer mesio-distalen Linie, vorzugsweise zweier mesio-distaler Linien.
- Die Oberflächenform der Zahnpräparation, d.h. die dreidimensionale Form der zur Aufnahme des Passkörpers vorbereiteten Oberfläche des zu behandelnden Zahnes. Es ist z.B. denkbar, eine bestimmte Anzahl zulässiger Typen von Zahnpräparationen vorzusehen, von denen jede noch durch einen oder mehrere Parameter (wie z.B. eine Grösse) genauer definiert werden kann.
- Mindestens ein Teil der Oberflächenform des Passkörpers. Beispielsweise kann ein Netz von Punkten auf der ganzen oder einem Teil der Oberfläche des zu erstellenden Passkörpers angegeben werden.
- Die Grösse des Passkörpers.
- Die gewünschte Farbe und/oder Transluzenz des Passkörpers, wobei hierunter auch ein Farbverlauf oder Farbschichtungen zu verstehen sind.
- Das gewünschte Material des Passkörpers.

Hier ist anzumerken, dass im Rahmen dieses Textes die zahnmedizinisch gebräuchlichen morphologischanatomischen Bezeichnungen gewählt werden. Dabei bedeutet:
oral: der Mundhöle zugewandt
lingual: der Zunge zugewandt
bukkal: wangenseitig
labial: lippenseitig
fazial: dem Gesicht zugewandt
okklusal: Bereich der Kaufläche (Seitenzähne)
inzisal: Bereich der Schneidekante (Frontzähne)
mesial: der Mitte des Zahnbogens zwischen den beiden zentralen Schneidezähnen zugewandt
distal: von der frontalen Mitte des Zahnbogens dem Ende der Zahnreihe zugewandt
zervikal: am Zahnhals, an der Grenze zwischen anatomischer Zahnrkone und Zahnwurzel, welche durch die Schmelz-Zementgrenze gebildet wird.

Zur Aufnahme der morphologischen Parameter können Techniken verwendet werden, wie sie z.B. in EP 054 785 beschrieben sind. Vorzugsweise kann einer oder mehrere der folgenden Schritte durchgeführt werden:
A) Erfassung des präparierten zu behandelnden Zahns von okklusal. Vorzugsweise wird zusätzlich mindestens ein Teil der nächsten Nachbarzähne aufgenommen.
B) Erfassung des bzw. der antagonistischen Zähne (d.h. die dem zu behandelnden Zahn auf dem Gegenkiefer gegenüberliegenden Zähne) von okklusal.
C) Erfassung des zu behandelnden Zahnes und mindestens eines Teils seiner benachbarten Zähne und benachbarten antagonistischen Zähne bei geschlossenem Kiefer von bukkal und/oder an einem Teilmodell der Zähne von lingual.
D) Erfassung des Kontaktmusters zwischen dem zu behandelnden Zahn und dessen Antagonisten mittels druckempfindlicher Kontaktsensorfolie.
E) In-situ Aushärtung und anschliessende Ausmessung einer Abdruckmasse (Erstellen eines Registrats).

Die Erfassungen gemäss A - C erfolgen vorzugsweise mittels optischer Messkamera, vgl. z.B. EP 054 785, mit denen ein dreidimensionales numerisches Oberflächenrelief erstellt werden kann. Es sind jedoch z.B. auch andere optische, mechanische oder anders geartete Messverfahren denkbar.

Die Auswertung der so erhaltenen Daten erfolgt entweder halbautomatisch oder vollautomatisch, um die morphologischen Parameter zu ermitteln. Bei einer halbautomatischen Auswertung wird z.B. die Aufnahme gemäss Punkt A auf einem Bildschirm dargestellt, so dass der Zahnarzt oder Zahntechniker die Ränder der Nachbarzähne markieren kann. Aus diesen Rändern kann ein Computerprogramm sodann die gewünschte mesio-distale Ausdehnung einer Krone ermitteln. Entsprechende Verfahren und Programme sind dem Fachmann bekannt.

Die Erfassung antagonistischer Daten, insbesondere gemäss Punkt B obiger Aufstellung, ermöglicht es, die Form der Okklusalfläche des zu erstellenden Passkörpers zu ermitteln. Hierzu ist es jedoch notwendig, die antagonistischen Daten insbesondere in okklusaler und mesio-distaler Richtung mit den am zu behandelnden Zahn gewonnenen Daten zu korrelieren, d.h. die Datensätze in ein gemeinsames Referenzkoordinatensystem zu setzen. Dies geschieht am besten mittels der gemäss Punkt C oder D gewonnenen Daten, da diese sowohl Daten des zu behandelnden Zahns als auch antagonistische Daten gleichzeitig enthalten.

In einem nächsten Schritt 6 werden die so ermittelten morphologischen Parameter mit den in Datenbank 3 abgespeicherten Konfektionsparameter der zur Verfügung stehenden Konfektionskörper verglichen. Die Konfektionsparameter können z.B. in der gleichen Form vorliegen wie anhand der morphologischen Parameter in Tabelle 1 gezeigt. Sie können auch in anderen Form abgelegt sein, wobei in diesem Falle geeignete Umwandlungsvorschriften festzulegen sind, die es erlauben, die morphologischen Parameter und die Konfektionsparameter in einem Computerprogramm zu vergleichen.

Vorzugsweise beschreiben die Konfektionsparameter die Oberflächenform der Konfektionskörper möglichst vollständig, so dass sie zur Berechnung der weiter unten beschriebenen Formkorrektur sowie zur ebenfalls weiter unten beschriebenen Lagebestimmung des Konfektionskörpers in der Nachbearbeitungsvorrichtung verwendet werden können.

Der Vergleich zwischen morphologischen Parametern und Konfektionsparametern wird mittels einer Auswahlregel durchgeführt, die einen zu verwendenden Konfektionskörper auswählt. Die Auswahlregel kann in verschiedenster Weise implementiert sein. Als Auswahlregeln können beispielsweise eine oder mehrere der folgenden Regeln verwendet werden, je nachdem welche Parameter zur Verfügung stehen und was für ein Passkörpertyp (Inlay, Overlay, Veneer, etc.) zu erstellen ist:
1) Der Konfektionskörper muss durch abtragende Bearbeitung in den gewünschten Passkörper übergeführt werden können, wobei gewisse Abweichungen in gewissen Bereichen zulässig sein können.
2) Der Zahntyp des zu behandelnden Zahnes und des Konfektionskörpers müssen übereinstimmen.
3) Die Positionen der Höckerspitzen und die Position der Fissuren haben möglichst genau (für Kronen oder Teilkronen) übereinzustimmen.
4) Die mesio-distale bzw. die linguo-bukkale bzw. linguofaziale Ausdehnung soll möglichst genau übereinstimmen.
5) Die Form des Konfektionskörpers hat die Form des gewünschten Passkörpers zu enthalten.
6) Gewünschte Farbe, Transluzenz und Material haben möglichst genau übereinzustimmen.
Wichtigste Auswahlregel ist dabei sicherlich die Regel 1, wonach (gegebenenfalls bis auf einige morphologischanatomisch wenig wichtige Bereiche) ein Formüberschuss am Konfektionskörper vorhanden sein muss. Regel 5 ist eine etwas strengere Version von Regel 1. Die Auswahlregeln können vom Zahntyp abhängen.

Erfüllen mehrere Konfektionskörper die Auswahlregel so kann z.B. derjenige Konfektionskörper ausgewählt werden, der die geringste Nachbearbeitung erfordert, d.h. der (z.B. aufgrund seines Volumens) dem herzustellenden Passkörper am nächsten ist.

In einem nächsten Schritt 7 ist eine Formkorrektur zu ermitteln. Hierzu können z.B. der ausgewählte Konfektionskörper und der herzustellende Passkörper rechnerisch überlagert werden, beispielsweise so, dass sie im Okklusalbereich (Seitenzähne) oder im Fazialbereich (Frontzähne) möglichst gut miteinander zur Deckung kommen und der herzustellende Passkörper ganz im Konfektionskörper enthalten ist. Sodann wird aus der Differenz des Konfektionskörpers und des herzustellenden Passkörpers dasjenige Volumen ermittelt, das als Formüberschuss vom Konfektionskörper entfernt werden muss.

Zur Durchführung von Schritt 7 ist es notwendig, die Oberflächenform des gewünschten Konfektionskörpers möglichst genau zu kennen. Falls die Konfektionsparameter die Oberflächenform nicht ausreichend beschreiben, so kann z.B. aus einer Auswahl von vorab empirisch ermittelten Oberflächenformen eine ausgewählt werden, die mit den Konfektionsparametern kompatibel ist - diese Oberflächenform kann sodann mit derjenigen des Konfektionskörpers überlagert werden.

Nun kann in Schritt 8 die Nachbearbeitung des ausgewählten Konfektionskörpers stattfinden. Hierzu kann z.B. eine Nachbearbeitungsvorrichtung 9 der in US 4 766 704 beschriebenen Art verwendet werden, in welcher mittels einem oder mehrerer Schleifwerkzeuge 9a eine numerisch gesteuerte, abrasive Bearbeitung des Konfektionskörpers stattfindet.

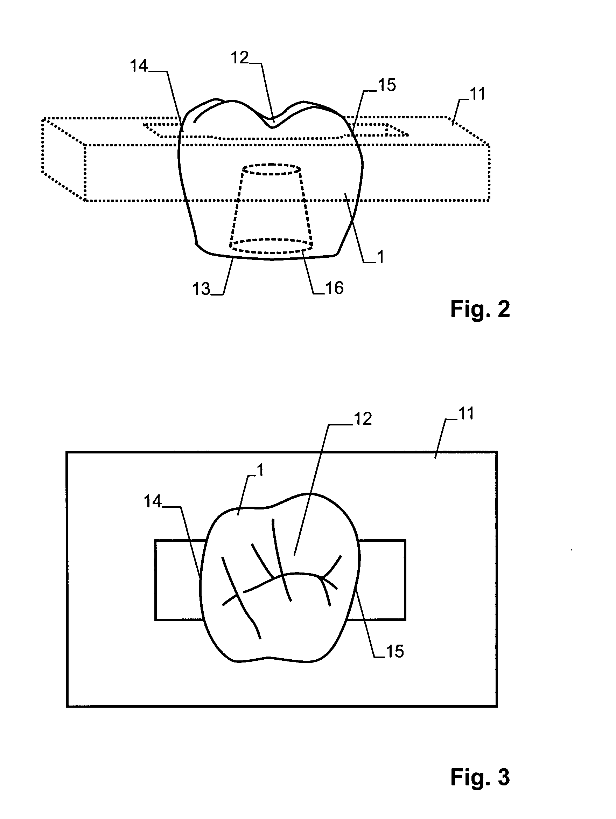

Um den ausgewählten Konfektionskörper 1 zu bearbeiten, wird dieser vorzugsweise in einer Haltevorrichtung 11 angeordnet, wie sie in Fig. 2 und 3 dargestellt ist. Die Haltevorrichtung 11 kann dann in der Nachbearbeitungsvorrichtung 9 eingespannt werden und hält den Konfektionskörper 1 während der Nachbearbeitung fest.

Vorzugsweise besteht die Haltevorrichtung 11 aus einem elastischen Material, welches den Konfektionskörper 1 formschlüssig umschliesst, d.h. zum Entfernen des Konfektionskörpers 1 aus der Haltevorrichtung kann und muss diese elastisch deformiert werden.

Für einen Konfektionskörper in der Form einer Backenzahnkrone kann die Haltevorrichtung 11 z.B., wie in Fig. 2 und 3 dargestellt, aus einer Platte bestehen, welche den Konfektionskörper auf der Höhe eines Äquators umfasst. Die Haltevorrichtung 11 sollte die Kaufläche 12 und die Präparationsfläche 13 nicht überdecken, da die Kaufläche zur Kalibrierung wichtig ist und in der Regel vor allem die Präparationsfläche nachbearbeitet werden muss. Vorzugsweise lässt die Haltevorrichtung 11 auch zumindest zentrale Bereiche der mesialen und distalen Wände 14 bzw. 15 frei, so dass auch dort eine Nachbearbeitung und/oder eine (weiter unten beschriebene) Abtastung der Position stattfinden kann.

Damit die Nachbearbeitung mit der nötigen Genauigkeit durchgeführt werden kann, muss die Lage des Konfektionskörpers in der Nachbearbeitungsvorrichtung 9 bekannt sein. Hierzu kann theoretisch die Lage der Haltevorrichtung 11 gegenüber dem Konfektionskörper genau definiert und die Haltevorrichtung 11 zudem nur in wohldefinierter Lage in der Nachbearbeitungsvorrichtung 9 einbaubar sein. Dies ist in der Praxis jedoch nur mit einer gewissen Toleranz möglich, weshalb in der Nachbearbeitungsvorrichtung 9 vorzugsweise die relative Lage zwischen dem zu verwendenden Konfektionskörper und dem Werkzeug 9a gemessen wird. Hierzu kann das Werkzeug 9a mit dem Konfektionskörper 1 an mehreren Punkten in Kontakt gebracht werden, wobei z.B. ein Rückgang der Drehzahl des laufenden Werkzeugs im Moment des Kontakts registriert und daraus auf die Position des angefahrenen Punktes des Konfektionskörper 1 geschlossen wird. Für eine vollständige Erfassung der Lage des Konfektionskörpers 1 werden mehrere Punkte seiner Oberfläche auf diese Weise angefahren, so dass die Lageparameter z.B. mittels Ausgleichsrechung aus der in der Datenbank 3 abgespeicherten Oberflächenform des Konfektionskörpers 1 berechnet werden können.

Für eine Groborientierung des Konfektionskörpers in der Nachbearbeitungsvorrichtung 9 kann auch die Haltevorrichtung 11 vom Werkzeug 9a angefahren und deren Position ausgemessen werden.

Ist der Konfektionskörper 1 eine Seitenzahnkrone, so wird das Werkzeug 9a z.B. mindestens mit je einem Punkt auf der Kaufläche 12, der mesialen Wand 14, der distalen Wand 15, und vorzugsweise auch der Präparationsfläche 13 in Kontakt gebracht, da in diesen Bereichen eine sehr genaue Positionierung notwendig ist bzw. (im Falle der Präparationsfläche) in der Regel die grössten Korrekturen erforderlich sind. Vorzugsweise wird die Kaufläche 12 mehrmals angefahren, so dass die Position ihrer zentralen Fossa und ihrer Höcker mindestens teilweise bestimmt werden kann.

Bei der Nachbearbeitung werden sodann aufgrund der ermittelten Formkorrektur die überschüssigen Teile des Konfektionskörpers 1 entfernt. Wenn z.B. aus dem in Fig. 2 dargestellten Konfektionskörper eine Krone für einen Seitenzahn herzustellen ist, müssen in der Regel lediglich geringe Korrekturen an der Kaufläche 12 durchgeführt werden. An der Präparationsfläche 13 ist vorzugsweise bereits eine Ausnehmung 16 vorgeformt, welche an einen standardisierten am zu behandelnden Zahn zu präparierenden Kegelstumpf angepasst ist.

Bei Herstellung einer Teilkrone oder einer Einlagefüllung müssen grössere Bereiche des Konfektionskörpers 1 entfernt werden.

Nach dem Schleifen sollten die Bereiche, die bearbeitet wurden, nachpoliert werden. Dies kann von Hand oder vorzugsweise mit einem speziellen Werkzeug in der Nachbearbeitungsvorrichtung 9 geschehen.

Nach beendeter Nachbearbeitung wird die Haltevorrichtung vom Konfektionskörper entfernt. Da die Haltekörper keine speziellen Ausformungen um Konfektionskörper benötigte, wie z.B. Löcher oder Stifte, ist der Konfektionskörper jetzt fertig und besitzt die Form des gesuchten Passkörpers. Es sind keine weiteren formgebenden Schritte mehr notwendig.

Sodann kann der fertige Passkörper am zu behandelnden Zahn eingebracht werden (Schritt 20 in Fig. 1).

Die hier erwähnten Schritte können z.B. alle in einer Zahnarztpraxis durchgeführt werden. Es ist jedoch auch möglich, dass lediglich die Schritte 5 und 20 in der Zahnarztpraxis durchgeführt werden. Die morphologischen Parameter können z.B. an ein Zahnlabor übermittelt werden, wo die Schritte 6 - 8 erfolgen.

Um eine optimale Anpassung der Farbe des Passkörpers an den zu behandelnden Zahn zu gewähren, sind in der Datenbank vorzugsweise auch Farbbilder der Konfektionskörper 1 abgespeichert. Zusätzlich werden in Schritt 5 Farbaufnahmen vom zu behandelnden Zahn und dessen Nachbarzähnen erstellt. Vor der Auswahl des zu verwendenden Konfektionskörpers kann die Farbaufnahme eines in Frage kommender Konfektionskörpers mit jener des zu behandelnden Zahnes überlagert und in Echtfarbdarstellung auf einem Bildschirm angezeigt werden, so dass eine "Vorschau" erstellt und das farbliche Zusammenspiel geprüft werden kann.

Eine Vorrichtung zur Durchführung des hier beschriebenen Verfahrens kann z.B. aus einem Computer bestehen, welcher die Datenbank 3 enthält und mit geeigneter Software zum Durchführen der Schritte 6 - 8 ausgestattet ist. Der Computer kann z.B. in einer fahrbaren Aufnahmeeinheit zur Verfügung gestellt werden, die vorzugsweise direkt neben dem Patientenstuhl aufgestellt wird. Somit können insbesondere die Schritte 5 und 6 direkt am Patienten durchgeführt werden, und auch eine Farbanpassung kann, als Teil von Schritt 6, direkt und zusammen mit dem Patienten erfolgen.

Die Vorrichtung kann ausserdem eine Messkamera zum Ausmessen des zu behandelnden Zahns im Munde des Patienten umfassen. Die Messkamera kann in den Instrumententisch integriert werden, zusammen mit ihrer unmittelbaren Kamerasteuerungs-, Datenaquisitions- und Versorgungselektronik. Im Bereich des Patientenstuhls kann ein Flachbildmonitor integriert sein. Der Bildbearbeitungsund Schleifdatenrechner kann als Server separat vorgesehen werden, der entweder zusammen mit der Bearbeitungsmaschine und einem Zahnlager oder getrennt davon, an einem Ort in der Praxis untergebracht ist und über Datenleitungen bzw. Funk mit dem Aquisitionsteil am Patientenstuhl verbunden ist.

## Patentansprüche

1. Verfahren zur Herstellung eines Passkörpers zur Restauration mindestens eines Teils eines zu behandelnden Zahns, bei welchem an einem Patienten morphologische Parameter aufgenommen werden, die die Form und Grösse des Passkörpers mindestens teilweise festlegen, **gekennzeichnet durch** die folgenden Schritte
Bereitstellen einer Vielzahl von zu Zahnteilen vorgeformten Konfektionskörpern (1), deren Form und Grösse als Konfektionsparameter in einer Datenbank (3) abgelegt ist,
Vergleichen der morphologischen Parameter mit den Konfektionsparametern der Datenbank (3) und Auswahl eines zu verwendenden Konfektionskörpers aufgrund einer Auswahlregel,
Ermitteln einer Formkorrektur aus Unterschieden zwischen dem zu verwendenden Konfektionskörper und den morphologischen Parametern und
numerisch gesteuertes, abrasives Nachbearbeiten des zu verwendenden Konfektionskörpers in einer Nachbearbeitungsvorrichtung (9) entsprechend der Formkorrektur zum Herstellen des Passkörpers.

2. Verfahren nach Anspruch 1, wobei die Nachbearbeitungsvorrichtung (9) mindestens ein abrasives Werkzeug (9a) aufweist, wobei in der Nachbearbeitungsvorrichtung (9) die relative Lage zwischen dem zu verwendenden Konfektionskörper und dem Werkzeug (9a) gemessen wird.

3. Verfahren nach Anspruch 2, wobei zum Messen der relativen Lage das Werkzeug (9a) mit dem zu verwendenden Konfektionskörper an mehreren Punkten in Kontakt gebracht wird.

4. Verfahren nach Anspruch 3, wobei der zu verwendende Konfektionskörper eine Zahnkrone mit Kaufläche und mesialen und distalen Wänden ist und wobei zum Messen der relativen Lage das Werkzeug (9a) mindestens mit der Kaufläche, der mesialen Wand und der distalen Wand in Kontakt gebracht wird, und vorzugsweise dass das Werkzeug (9a) auch von bukkal und/oder oral und/oder zervikal mit dem Konfektionskörper in Kontakt gebracht wird.

5. Verfahren nach einem der Ansprüche 3 oder 4, wobei in der Kaufläche des Konfektionskörpers Höcker, Fossae und Randleisten vorgeformt sind und wobei mindestens eine Position der Höcker und/oder der Fossae und/oder der Randleisten gemessen wird.

6. Verfahren nach einem der vorangehenden Ansprüche, wobei zum Aufnehmen der morphologischen Parameter Positionen von Nachbarzähnen des zu behandelnden Zahns ausgemessen werden.

7. Verfahren nach einem der vorangehenden Ansprüche, wobei der Passkörper mindestens einen Teil der Kaufläche des zu behandelnden Zahns ersetzt, wobei zum Aufnehmen der morphologischen Parameter Aufnahmen von antagonistischen Zähnen und/oder von Registraten antagonistischer Zähne zum zu behandelnden Zahn durchgeführt werden.

8. Verfahren nach Anspruch 7, wobei faziale und/oder linguale und/oder bukkale Aufnahmen der antagonistischen Zähne oder eines Modells der Zähne bei geschlossenem Kiefer erstellt werden,
und insbesondere dass auch okklusale Aufnahmen der antagonistischen Zähne erstellt werden, welche über die fazialen und/oder bukkalen Aufnahmen mit der Position des zu behandelnden Zahns korreliert werden.

9. Verfahren nach einem der vorangehenden Ansprüche, wobei die morphologischen Parameter und/oder die Konfektionsparameter mindestens einen der folgenden Werte umfassen:
Zahntyp des zu behandelnden Zahns, mesio-distale Ausdehnung des Passkörpers, oro-bukkale Ausdehnung des Passkörpers, Position der Schmelz-Zementgrenze,
für Seitenzähne Position der Höckerspitzen und/oder der Längsfissuren und/oder der Querfissuren und/oder der Randleisten,
für Veneers eine von fazial gesehene Umfangslinie und/oder ein Höhenprofil entlang mindestens einer mesio-distalen Linie, vorzugsweise zweier mesio-distaler Linien,
Oberflächenform der Zahnpräparation,
mindestens ein Teil Oberflächenform des Passkörpers bzw. Konfektionskörpers,
Grösse des Passkörpers bzw. Konfektionskörpers,
Farbe und/oder Transluzenz,
Material.

10. Verfahren nach einem der vorangehenden Ansprüche, wobei in der Datenbank (3) Farbaufnahmen der Konfektionskörper abgespeichert sind, wobei mindestens eine Farbaufnahme des zu behandelnden Zahnes mit Nachbarzähnen erstellt wird, und wobei die Farbaufnahmen der Konfektionskörper und die Farbaufnahme des zu behandelnden Zahnes zum Erzeugen einer Vorschau auf einem Bildschirm überlagert werden.

11. Verfahren nach einem der vorangehenden Ansprüche, wobei die Auswahlregel dergestalt ist, dass in mesialen und/oder distalen und/oder okklusalen und/oder zervikalen Bereichen formunterschüssige Konfektionskörper ausgeschlossen werden und wobei der zu verwendende Konfektionskörper im Bereich von Formüberschüssen abrasiv nachbearbeitet wird.

12. Verfahren nach einem der vorangehenden Ansprüche, wobei die Konfektionskörper in Haltevorrichtungen (11) angeordnet werden und der zu verwendende Konfektionskörper mit der Haltevorrichtung (11) in der Nachbearbeitungsvorrichtung (9) befestigt wird, und insbesondere dass die Haltevorrichtungen (11) die Konfektionskörper formschlüssig und vorzugsweise elastisch umgreifen.

13. Verfahren nach Anspruch 12, wobei die Haltevorrichtung (11) mindestens zentrale Bereiche der mesialen und distalen Wände freilässt, wobei die Nachbearbeitungsvorrichtung (9) ein abrasives Werkzeug (9a) aufweist, wobei in der Nachbearbeitungsvorrichtung (9) die relative Lage zwischen dem zu verwendenden Konfektionskörper und dem Werkzeug (9a) gemessen wird indem mit dem Werkzeug (9a) zumindest die zentralen Bereiche der mesialen und distalen Wände kontaktiert werden.

14. Verfahren nach einem der Ansprüche 12 oder 13, wobei die Haltevorrichtung (11) nach der Nachbearbeitung vom Konfektionskörper entfernt wird und nach dem Entfernen der Haltevorrichtung (11) am Konfektionskörper keine weiteren formgebenden Schritte durchgeführt werden.

15. Verfahren nach einem der vorangehenden Ansprüche, wobei der ausgewählte Restaurationskörper nach dem Nachbearbeiten von der Nachbearbeitungsvorrichtung (9) poliert wird.

16. Konfektionskörper zur Verwendung im Verfahren nach einem der vorangehenden Ansprüche, **dadurch gekennzeichnet, dass** er eine Haltevorrichtung (11) zur Befestigung des Konfektionskörpers in einer Nachbearbeitungsvorrichtung (9) während der Nachbearbeitung aufweist, wobei die Haltevorrichtung (11) ohne Beschädigung des Konfektionskörpers abnehmbar vom Konfektionskrörper ist, derart, dass der verbleibende Konfektionskörper nach Abnehmen der Haltevorrichtung (11) ohne weitere Nachbearbeitung die Form des Passkörpers hat.

17. Konfektionskörper nach Anspruch 16, wobei die Haltevorrichtung den Konfektionskörper formschlüssig und vorzugsweise elastisch umgreift.

18. Konfektionskörper nach einem der Ansprüche 16 oder 17, wobei er eine Zahnkrone mit Kaufläche, mesialen, distalen, bukkalen und lingualen Wänden und einer Präparationsfläche ist und die Haltevorrichtung (11) die Kaufläche und die Präparationsfläche freilässt.

19. Konfektionskörper nach Anspruch 18, wobei die Haltevorrichtung (11) mindestens zentrale Bereiche der mesialen und distalen Wände freilässt.

20. Vorrichtung zum Herstellen einer Passkörpers zur Restauration eines Zahnes mit Mitteln zur Durchführung der Schritte des Verfahrens nach einem der vorangehenden Ansprüche.
